# EUROPÄISCHE PATENTSCHRIFT

(11) **EP 1 926 931 B1**
(45) Veröffentlichungstag und Bekanntmachung des Hinweises auf die Patenterteilung: **30.12.2009**
(21) Anmeldenummer: 06805814.8
(22) Anmeldetag: 22.09.2006
(51) Int. Cl.: F16L 59/065

(54) **VERFAHREN ZUR HERSTELLUNG EINES FOLIENUMHÜLLTEN, PULVERGEFÜLLTEN VAKUUMDÄMMKÖRPERS**
METHOD FOR THE PRODUCTION OF A VACUUM INSULATION ELEMENT WRAPPED IN A FILM, FILLED WITH POWDER
PROCEDE POUR FABRIQUER UN ELEMENT D'ISOLATION PAR LE VIDE, ENVELOPPE D'UNE PELLICULE ET REMPLI DE POUDRE

(30) Priorität: 23.09.2005 DE 102005045726
(43) Veröffentlichungstag der Anmeldung: 04.06.2008
(73) Patentinhaber: va-Q-tec AG, 97080 Würzburg (DE)
(72) Erfinder: HIEMEYER, Jochen, 97080 Würzburg (DE); CAPS, Roland, 63839 Kleinwallstadt (DE)
(74) Vertreter: Küchler, Stefan
(86) Internationale Anmeldenummer: PCT/EP2006/009247
(87) Internationale Veröffentlichungsnummer: WO 2007/033836

(56) Entgegenhaltungen:
- DE-A1- 4 421 625
- DE-A1- 10 058 566
- DE-A1- 10 114 633

## Beschreibung

Die Erfindung richtet sich auf ein Verfahren zur Herstellung eines folienumhüllten, pulvergefüllten Vakuumdämmkörpers (DE 100 58 566 A).

Mit evakuierten Dämmmaterialien können Wärmeleitfähigkeiten erreicht werden, die um den Faktor fünf bis zwanzig geringer sind als bei belüfteten, konventionellen Dämmstoffen. Es lassen sich zum Beispiel damit sehr kompakte, hochdämmende Transportbehälter für temperatursensitive Güter herstellen oder extrem schlanke Dämmaufbauten im Gebäudebereich realisieren.

Für den Kern der evakuierten Dämmplatten geeignete druckbelastbare Materialien liegen üblicherweise zur besseren Verarbeitung in Plattenform vor. Diese Platten sind üblicherweise aus Pulver gepreßt bzw. aus einer gepreßten Tafel zugeschnitten und außerdem gewöhnlich noch zur Minderung der Staubbildung mit einem luftdurchlässigen Polyestervlies umhüllt. Damit wird verhindert, dass beim Evakuierungsvorgang in der Vakuumkammer Staub durch die zwischen den Siegelbalken liegende Beutelöffnung von wenigen Millimeter Höhe gelangt und sowohl die Siegelnähte als auch die Vakuumkammer verschmutzt.

Die im wesentlichen staubfreien Kernplatten werden auf Temperaturen um 150 °C aufgeheizt, anschließend mit einer vakuumdichten Hochbarrierefolie umhüllt, in eine Vakuumkammer gelegt und evakuiert. Dabei liegt die verbleibende Öffnung des Hochbarrierefolienbeutels zwischen zwei Siegelbalken. Am Ende des Evakuierungsvorgangs werden die beiden Siegelbalken aufeinander gepresst und versiegeln durch Hitzeeinwirkung die Beutelöffnung. Nach dem Belüften der Vakuumkammer lastet der atmosphärische Luftdruck auf den evakuierten Dämmplatten. Kernplatten aus mikroporöser Kieselsäurepulver weisen eine sehr feine Porenstruktur auf und lassen relativ hohe Gasdrücke zu, ohne dass die Wärmeleitfähigkeit des Restgases eine Rolle spielt. So ist bei diesen mikroporösen Materialien nur ein Vakuum von 1 bis 10 mbar notwendig, um die Wärmeleitfähigkeit auf 0,004 bis 0,005 W/mK zu bringen. Umhüllungen aus speziellen Hochbarrierefolien, die nur eine hauchdünne, aufgedampfte Beschichtung aus Aluminium aufweisen, stellen sicher, dass der Gasdruck im Kernmaterial nur mit etwa einem mbar pro Jahr ansteigt. Allerdings bedingt der oben beschriebene Herstellungsprozess des mikroporösen Kieselsäurepulvers und der aufwändige Pressvorgang der Pulverplatten einen relativ hohen Preis dieses Kernmaterials. Bei der Herstellung von Wärmedämmplatten wird der Kern üblicherweise aus großen Tafeln des gepreßten Kernmaterials ausgeschnitten bzw. ausgesägt. Bei einem derartigen Zuschnitt entstehen unweigerlich Reste, welche als Verschnitt zu entsorgen sind und daher das Herstellungsverfahren zusätzlich verteuern. Die Dicke der solchermaßen hergestellten Wärmdeämmplatten ist durch die Stärke der Tafeln des Rohmaterials vorgegeben und daher nicht beeinflußbar. Andere als plattenförmige Gestalten lassen sich mit diesem vorbekannten Verfahren überhaupt nicht herstellen.

Aus diesen Nachteilen des vorbekannten Standes der Technik resultiert das die Erfindung initiierende Problem, ein Herstellungsverfahren für einen evakuierten Wämedämmkörper mit nahezu beliebiger Gestalt und/oder Abmessung zu finden, bei welchem für die Formung des Kerns kein Abfall entsteht.

Die Lösung dieses Problems gelingt durch die Merkmale des Anspruchs 1 und Aus mit einem Vakuumkörper gemäß Anspruch 35.

Zwar wäre es denkbar, das feine Pulver direkt in einen Beutel aus Hochbarrierefolie einzufüllen und zu evakuieren. Dies ist jedoch nicht möglich, weil beim Evakuieren durch die Beutelöffnung, die zwischen zwei während der Evakuierung geöffneten Siegelbalken liegt, auch das feinteilige Pulver mit heraus gesaugt würde. Es wäre allenfalls möglich, grobkörnige Materialien, z.B. Granulate, direkt in einen Hochbarrierebeutel zu füllen und auf diese Weise zu evakuieren, da die Granulatteilchen durch die enge Beutelöffnung von z.B. 1 bis 2 mm zurückgehalten werden und nicht nach außen gelangen, wenn ihre Abmessungen größer sind als die Dicke einer schlitzförmigen Evakuierungsöffnung in einem Folienbeutel. Solche grobkörnigen Materialien würden jedoch eine sehr unregelmäßige Stützfläche unterhalb der Folie bilden mit scharfkantigen bzw. spitzen Vorsprüngen, welche infolge der Druckdifferenz zwischen dem äußeren atmosphärischen Druck und dem inneren Vakuum die Folie lokal überlasten würden. Zudem müßten sie aufgrund der groben Porenstruktur auf sehr geringe Gasdrücke evakuiert werden, um die Gas-Wärmeleitfähigkeit in den Poren auszuschalten.

Bei dem erfindungsgemäßen Verfahren wird statt dessen ein loses, ungeformtes Pulver mit feinen Körnern direkt in einen Beutel aus Hochbarrierefolie eingebracht; ein Filtermaterial wird in der Öffnung befestigt, welches in der Lage ist, das eingeschlossene Pulver zurückzuhalten, die Luft jedoch entweichen läßt; schließlich wird der Beutel in einer Vakuumkammer evakuiert und luftdicht verschlossen. Bevor die Vakuumkammer belüftet wird, kann der Beutel in der Vakuumkammer noch durch mechanisches Pressen in Form gebracht werden, und zwar in nahezu beliebige Gestalt und Größe, vorausgesetzt, man kann Beutel mit entsprechenden Abmessungen herstellen. Das zu verwendende Pulver ist sehr fein, vorzugsweise mit einer Korngröße unterhalb von 0,1 mm, insbesondere mit einer Korngröße unterhalb von 0,05 mm, so dass sich während des Preßvorgangs eine sehr glatte Stützfläche für die Folie herstellen läßt, welche die Folienlage kaum verletzt. Dennoch wird dieses feinkörnige Pulver selbst bei hohen Gasströmen während der Evakuierung von dem in der Beutelöffnung angebrachten Filtermaterial vollständig im Beutel zurückgehalten, so dass der Evakuierungsraum nicht verschmutzt wird. Dadurch werden zudem die Siegelnähte des Hochbarrierefolienbeutels staubfrei gehalten, so dass ein optimales Verschweißen und damit eine dauerhafte Vakuumdichtigkeit sichergestellt ist. Außerdem werden durch den Verzicht auf das Vorformen eines harten Kerns einige Prozessschritte eingespart und nicht nutzbare Schnittreste beim Zerschneiden des Kerns auf ein gewünschtes Maß vermieden. Es entsteht kein Abfall mehr.

Der dreiseitig geschlossene Beutel aus Hochbarrierefolie wird über seine verbleibende Öffnung mit einer gewissen, vorab berechneten Menge an Pulver gefüllt. Manche Pulversorten absorbieren an der Luft Feuchtigkeit und müssen deshalb vor dem Abfüllen mit üblichen Verfahren getrocknet werden. Aufgrund der schnellen Verarbeitungsmöglichkeit kann der Eintrag von Feuchtigkeit sehr gering gehalten werden, so dass sich das eingefüllte Pulver zeitnah sehr gut evakuieren lässt.

Es hat sich als günstig erwiesen, dass der Folienbeutel aus einer Aluminiumverbundfolie und/oder aus einer metallisierten Hochbarrierefolie gefertigt wird. Insbesondere ist es vorteilhaft den Beutel mit einer über die Fläche verlaufenden, senkrecht zur Öffnung platzierten Naht herzustellen, z.B. in der Art eines Seitenfaltenbeutels. Dadurch lässt sich die Pulverschüttung später leicht in eine Quaderform pressen. Es können auch Folienbeutel aus zwei Folien hergestellt werden, die aufeinander gelegt und entlang der Ränder versiegelt werde, wobei zunächst eine Seite zum Befüllen und Evakuieren offengelassen wird. Dabei ist es auch möglich unterschiedliche Folien miteinander zu kombinieren: bspw. kann zur Herstellung eines Folienbeutels auf einer Seite eine Aluminiumverbundfolie und auf der anderen Seite eine aluminiumfolienfreie Hochbarrierefolie verwendet werden.

An der Innenseite des Folienbeutels kann eine Metallscheibe mit Sensorvlies zur Feststellung des internen Gasdrucks befestigt werden. Eine solche Sensorscheibe wird bspw. vor dem Füllvorgang von innen mit einem Klebeband auf der Hochbarrierefolie befestigt. Damit kann später kontrolliert werden, ob bei der Produktion der Vakuumdämmplatte die erforderlichen Gasdrücke je nach der Feinheit des verwendeten Pulver weniger als 2 mbar bis weniger als 0,1 mbar erreicht wurden. Diese Kontrolle muss bei jeder Vakuumdämmplatte durchgeführt werden, um die entsprechende Qualität sicher stellen zu können. Die Durchführung einer solchen Kontrolle des Herstellungsprozesses und insbesondere des Gasdruckes in der Vakuumdämmung ist in dem deutschen Patent 102 15 213 beschrieben.

Als Pulverfüllung eignen sich bspw. mikroporöse Kieselsäurepulver, Perlitpulver, Pulver aus zermahlenen offenporigen organischen Schäumen oder schüttbare Glasfasermaterialien mit kurzen Faserlängen. Davon ist Perlitpulver ein besonders preiswertes Material. Die Materialkosten von Perlit liegen gegenüber der mikroporösen Kieselsäure etwa um den Faktor 5 bis 10 niedriger. Perlit in Form eines vergleichsweise grobkörnigen Granulats wird als Schüttung ohne Vakuum für konventionelle Dämmzwecke, z.B. im Gebäudebereich verwendet. Jedoch ist Perlitgranulat mit Korngrößen im Bereich von 1 mm und darüber nicht für druckbelastbare Vakuumdämmungplatten mit Folienumhüllung geeignet, da die großen Porendurchmesser ein Vakuum erfordern, das von der Folie nur für kurze Zeit auf dem erforderlich niedrigen Niveau gehalten werden kann. Perlitgranulat lässt sich nicht ohne Bindemittel zu Platten verpressen, wie es bei mikroporösen Kieselsäuren möglich ist.

Es zeigt sich dagegen, dass in Verbindung mit dem erfindungsgemäßen Verfahren nun Perlitpulver mit sehr feiner Körnung zu Vakuumdämmplatten mit guten Eigenschaften verarbeitet werden kann. Es wurde gefunden, dass diese feinen Perlitpulver in der Vakuumdämmplatte einen Gasdruck von bis zu 2 mbar aufweisen können, bevor die Wärmeleitfähigkeit den Wert der Wärmeleitfähigkeit im voll evakuierten Zustand (< 0,1 mbar) deutlich übersteigt.

Wenn dem Perlitpulver pyrogene Kieselsäure und/oder Fällungskieselsäure beigemischt wird, bspw. in einem Anteil von bis zu 40 Gew.-%, vorzugsweise von 10 bis 30 Gew.-%, insbesondere in einem Anteil von 5 - 20 % mikroporöser Kieselsäure, so gelingt es, den wärmetechnisch maximal zulässigen Gasdruck auf Werte von mehr als 2 mbar anzuheben. Dabei wird der mittlere Porendurchmesser. der den maximal zulässigen Gasdruck bestimmt, weiter verkleinert, da das mikroporöse Pulver die Zwischenräume der Perlitschüttung mit seiner losen, hochporösen Struktur auffüllt. Damit lässt sich der am Ende der Nutzungsdauer zulässige Gasdruck auf einen Wert von 3 bis 10 mbar steigern und es verlängert sich die Nutzungsdauer gegenüber dem reinen Perlitpulver.

Die Erfindung empfiehlt, dass dem Pulver ein Trocknungsmittel beigegeben wird, z.B. Zeolith oder Calciumoxid. Eine Adsorption von Wasserdampf, dessen Vorhandensein das Vakuum verschlechtert, erreicht man dadurch, dass man vor oder nach dem Verfüllen (jedoch vor dem Einsiegeln des Filtermaterials) Trocknungsmittel in den Beutel beigibt. Aus ähnlichen Erwägungen heraus kann dem Pulver ein Gettermaterial beigegeben werden.

Beim Einfüllen des Pulvers kann sich der Folienbeutel um ein Mehrfaches der späteren Dicke des Vakuumdämmkörpers ausbeulen. Der Beutel wird dabei so gehalten, dass ein solches Ausbeulen um ein Mehrfaches der vorgesehen Enddicke ermöglicht ist. Infolgedessen ist die Füllhöhe zunächst wesentlich geringer als die spätere Höhe des Vakuumpaneels.

Die Erfindung sieht vor, dass ein Filtermaterial innen in der Nähe der Öffnung des Folienbeutels angebracht wird. Dazu gibt es mehrere Varianten. In einer Variante wird das Filtermaterial vor dem Einlegen wannenförmig gefaltet und/oder vorgeformt. Die Wanne hat eine Länge, die der Breite des zu fertigenden Vakuumpaneels entspricht und eine Dicke, die der geplanten Dicke des Vakuumpaneels entspricht, so dass das eingeklebte Filtermaterial mit dem Folienbeutel ein quaderförmiges Innenvolumen bildet, in dem sich das Pulver verteilen kann.

Ein solches, wannenförmig vorgeformtes Filterteil sollte derart eingelegt werden, dass seine Öffnung zur Öffnung des Folienbeutels zeigt. Vorzugsweise wird ein solches Filterteil nach dem Abfüllen in einem Abstand von der Ober- bzw. Öffnungskante des Folienbeutels von mindestens 2 cm ein- oder angelegt, bspw. 5 cm von der Oberkante entfernt. Es muß dabei sichergestellt sein, dass eine spätere Versiegelung der einander gegenüberliegenden Siegelschichten des Folienbeutels im Öffnungsbereich noch möglich ist.

Das Filtermaterial kann z.B. aus Polyestervlies bestehen, welches mit der Polyethylensiegelschicht des Folienbeutel unter dem Einfluss von Wärme verschweißbar ist. Andere, vorzugsweise flächenhafte Filtermaterialien sind ebenfalls nutzbar. Vorteilhaft ist dabei eine Ausrüstung einer Oberfläche mit einer thermisch aktivierbaren Klebekaschierung, die sich mit der Siegelschicht des Folienbeutels verbindet. Dazu wird der Folienbeutel mit dem innenliegenden Vliesteil zwischen eine Siegelvorrichtung gelegt und so versiegelt, dass sich die Siegelschicht des Hochbarrierebeutels mit dem Vliesteil verbindet. Die Vlieswanne wird mit beiden Innenseiten des Beutels versiegelt. Die Versiegelung kann z.B. mit einer Siegelzange geschehen, die von außen auf beide Beutelseiten angelegt wird, so dass die Schmelzschichten des Beutels mit dem Polyestervlies oder mit der Klebekaschierung des Vlieses verkleben. Dabei bleibt die Innenseite der Polyesterwanne jedoch unverklebt, so dass später eine rechteckige Endform des Vakuumpaneels möglich ist. Durch diese Maßnahme ist der Hochbarrierebeutel vollständig verschlossen für die Pulverfüllung, aber trotzdem noch durchlässig für Luft. Vorteilhaft ist eine Klebeschicht, die sich bereits bei einer Temperatur von etwa 100 °C mit der Siegelschicht des Folienbeutels verbindet, damit dieser weniger stark thermisch belastet wird.

Die Erfahrung hat gezeigt, dass es günstig ist, beim Versiegeln einen Abstandshalter mit den gleichen Abmaßen wie die spätere Dicke und Breite des Vakuumpaneel in die Wanne einzulegen. Die Siegelzange drückt dann jeweils über die Hochbarrierefolie und das Filtermaterial auf den Abstandshalter, z.B aus Metall, der als Gegendruckplatte wirkt. Dadurch wird eine unsachgemäße Versiegelung des Kantenbereichs der Vakuumdämmplatte vermieden. Der Bereich der Kanten bzw. Stirnseiten wird mit Hilfe der Gegendruckplatte separat versiegelt. Nach dem Versiegeln wird der Hilfsabstandshalter wieder herausgenommen.

Eine weitere Möglichkeit besteht darin, an Stelle eines wannenförmig vorgeformten Filtermaterials nur ein (mehrfach, bspw. zweifach) gefaltetes Filtermaterial einzulegen. Dieses wird oberhalb seiner Knickstelle(n) in einem Abstand von mindestens der Hälfte der Dicke des fertigen Vakuumpaneels mit der Siegelschicht des Hochbarrierebeutels verbunden. Die Siegelnaht wird am flachen Beutel mit der Siegelzange gefertigt. Bei dieser Maßnahme entsteht an den beiden Außen- bzw. Stirnseiten eine kleine Lücke in der Abdichtung gegen Pulverstaub. Diese Lücke kann durch eine von außen angebrachte Klammer geschlossen werden. Nach dem Evakuieren und Verschließen des Folienbeutels in der Vakuumkammer muss diese Klammer jedoch durch einen geeigneten Mechanismus entfernt werden.

Als Abstandshalter hat sich besonders eine Stange bewährt aus einem druckbelastbaren, offenporigen Dämmmaterial, z.B. einer gepressten Kieselsäure. Diese Stange wird allseitig mit dem Filtermaterial umhüllt. Die Länge der Stange entspricht der Breite des späteren Vakuumpaneels, die Dicke der Stange etwa der Dicke des Vakuumpaneels, und die Breite der Stange sollte etwa ihrer Dicke entsprechen. Der Abstandshalter aus Dämmmaterial wird im Beutel belassen und wird zu einem Teil der gut isolierenden Vakuumdämmplatte. Die z.B. mit einem Polyestervlies umhüllte Stange wird in die Öffnung des mit Pulver gefüllten Hochbarrierebeutel so weit eingelegt, dass sie später einen Kantenbereich des Vakuumpaneels bildet. Anschließend wird das Polyestervlies beidseitig auf der Fläche des Beutels mit Hilfe einer Siegeleinrichtung mit der inneren Seite des Beutels verbunden. Die beiden kleineren Kanten- bzw. Stirnflächen können mit versiegelt wrden, aber auch unversiegelt bleiben. Denn dadurch, dass die eingelegte Stange auch einen seitlichen Gegendruck aufnimmt, kann später während der Evakuierung in der Vakuumkammer von der Seite eine Vorrichtung auf den unversiegelten Kantenbereich drücken und diesen Bereich pulverdicht abschließen. Insofern eignet sich ein derartiger Abstandhalter besonders in Verbindung mit einem nicht wannenförmig vorgeformten, sondern nur gefalteten Streifen aus Filtermaterial.

Damit sich später während des Evakuierens ein Spalt zwischen der Hochbarrierefolie und dem eingelegten Abstandhalter bildet, kann das Filtermaterial zusätzlich mit einer in Längsrichtung des Innenraums des Beutels verlaufenden, kleinen Falte versehen werden. Im Bereich der Enden des Abstandhalters bzw. der Stange kann diese Falte zur besseren Fixierung auch thermisch verbunden werden. Im mittleren Bereich der Stange/des Abstandhalters dagegen wird sich das Filtermaterial zusammen mit der angeklebten Hochbarrierefolie von der Oberfläche der Stange/des Abstandhalters abheben können und einen Kanal für den Luftauslass bilden können. Vorteil dieses Verfahrens ist auch, dass durch die eingelegte Stange aus Dämmmaterial eine gute Kantenausbildung an der Verschlußseite des Folienbeutels möglich ist.

Indem ein Abstandshalter verwendet wird mit Bohrungen lotrecht zu dem Querschnitt der Öffnung, kann beim Evakuieren noch mehr Luft aus dem Inneren des Folienbeutels entweichen, ohne dass Staub nach außen gelangt. Durch diese Maßnahmen wird der Beutel für die Pulverfüllung vollständig verschlossen, bleibt aber trotzdem während des Evakuierungsvorgangs noch durchlässig für Luft.

Zur besseren thermischen Verklebung eines Polyestervlieses mit der Siegelschicht des Folienbeutels kann auch ein Klebevlies, insbesondere ein Polyolefinklebevlies eingelegt werden. Damit kann die Verklebe-/Siegeltemperatur wesentlich heruntergesetzt werden, so dass der Folienbeutel weniger belastet wird.

Nach dem pulverdichten Einkleben des Filtermaterials kann das Pulver im Hochbarrierefolienbeutel in die gewünschte Form gebracht werden, vorzugsweise durch Rütteln und/oder Pressen. Überschüssige Luft kann dabei entweichen. Der Preßdruck soll dabei möglichst nur maximal 1 bar betragen, damit eine möglichst geringe Dichte verbunden mit einer geringen Wärmeleitfähigkeit erreicht wird. Für Perlitpulver hat sich in diesem Zusammenhang bewährt, bei der Komprimierung des Pulvers im Folienbeutel eine Dichte zwischen 140 und 250 kg/m³, insbesondere zwischen 150 und 200 kg/m³ anzustreben. Im Falle von mikroporösem Kieselsäurepulver hat sich allerdings gezeigt, dass eine Vorverdichtung auf diese Weise nur in geringem Umfang erreicht werden kann. Die Formgebung erfolgt hier vorzugsweise durch eine Presseinrichtung nach dem Evakuieren und Versiegeln in der Vakuumkammer.

Schließlich entspricht es der Lehre der Erfindung, dass der Folienbeutel mit oder ohne Formgebung des Pulverbeutels evakuiert wird. Dazu wird der mit Pulver gefüllte Hochbarrierebeutel wie üblich in eine Vakuumkammer gelegt, wobei die Öffnung zwischen zwei Siegelbalken zu liegen kommt. Die Vakuumkammer wird zusammen mit dem Folienbeutel evakuiert und die verbliebene Öffnung des Folienbeutels versiegelt. Feinperlit lässt sich bspw. auf einen Gasdruck von anfänglich 0,1 mbar evakuieren. Das erfindungsgemäß in den Folienbeutel eingebaute Filtersystem verhindert dabei einen Austritt des Pulvers bei gleichzeitig guter Evakuierbarkeit.

Vor dem Belüften der Vakuumkammer kann der versiegelte, pulvergefüllte Folienbeutel noch (einmal) in die gewünschte Form gebracht werden, selbst wenn dies zuvor bereits geschehen ist. Denn eine Formung des Pulverbeutels allein durch den Luftdruck von außen während des Belüftens ergibt erfahrungsgemäß - wie auch bei einer Vorpressung außerhalb der Vakuumkammer - oft sehr unförmige Platten. Durch geeignete Rahmen an den Seiten des Vakuumbeutels und eine von oben oder von unten auf die Fläche des Folienbeutels wirkende Pressvorrichtung kann der bereits versiegelte Beutel im Vakuum z.B. in eine Quaderform gebracht werden. Eine Rütteleinrichtung hilft dabei, das lose im Pulverbeutel vorliegende, zu Beginn der mechanischen Pressung unbelastete Pulver gleichmäßig zu verteilen. Es ist aber auch möglich, durch die Oberflächenform der Presse dem Vakuumpaneel Strukturen aufzuprägen. Z.B. ermöglichen parallel verlaufende Vertiefungen, dass später nach der Belüftung der Vakuumkammer das evakuierte Dämmpaneel sich senkrecht zu diesen Vertiefungen krümmt oder krümmen läßt.

Nach dem Formen des pulvergefüllten Folienbeutels in der Vakuumkammer wird diese belüftet, das Vakuumpaneel wird mit atmosphärischem Druck belastet und kann der Kammer entnommen werden. Der atmosphärische Druck gibt ihm eine feste Form, so dass das Paneel leicht handhabbar ist. Die in der Kammer angebrachte Siegelnaht kann anschließend außerhalb der Kammer noch ergänzt werden durch eine weitere Siegelnaht, die noch näher an der Kante des Vakuumpaneels liegt und eine bessere Kantenform ermöglicht.

Weitere Merkmale, Eigenschaften, Vorteile und Wirkungen auf der Basis der Erfindung ergeben sich aus der folgenden Beschreibung einer bevorzugten Ausführungsform der Erfindung sowie anhand der beigefügten Zeichnung. Hierbei zeigt:

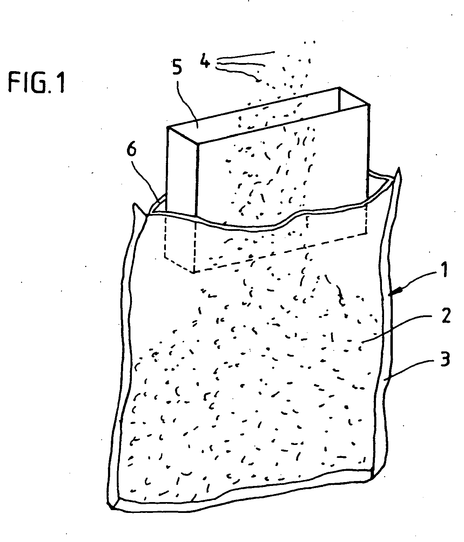

- Fig.1: das Befüllen eines Folienbeutels mit einem schüttfähigen Pulvermaterial in einer perspektivischen Ansicht;

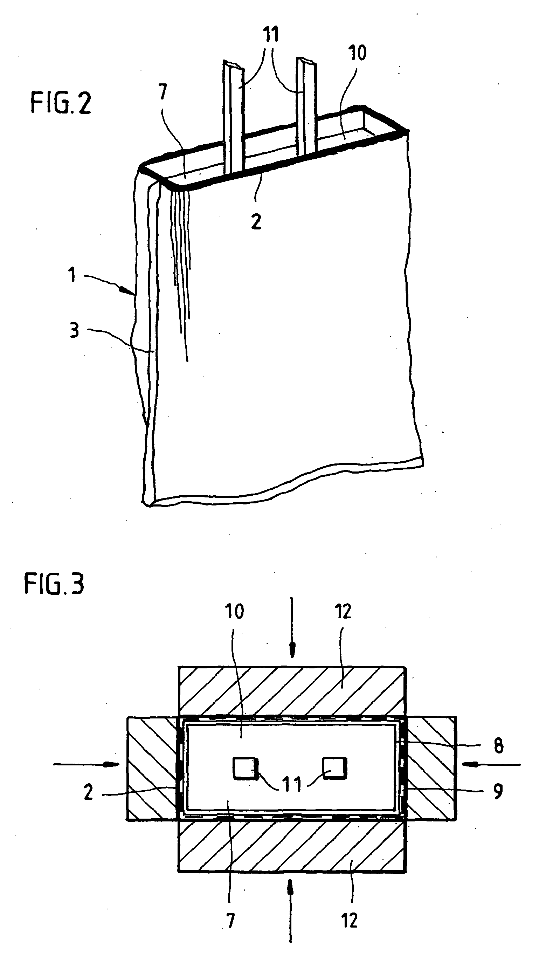

- Fig. 2: das Einsetzen eines Filtermaterials in die Öffnung des befüllten Folienbeutels in einer perspektivischen Ansicht;
- Fig. 3: eine Draufsicht auf die Fig. 2;

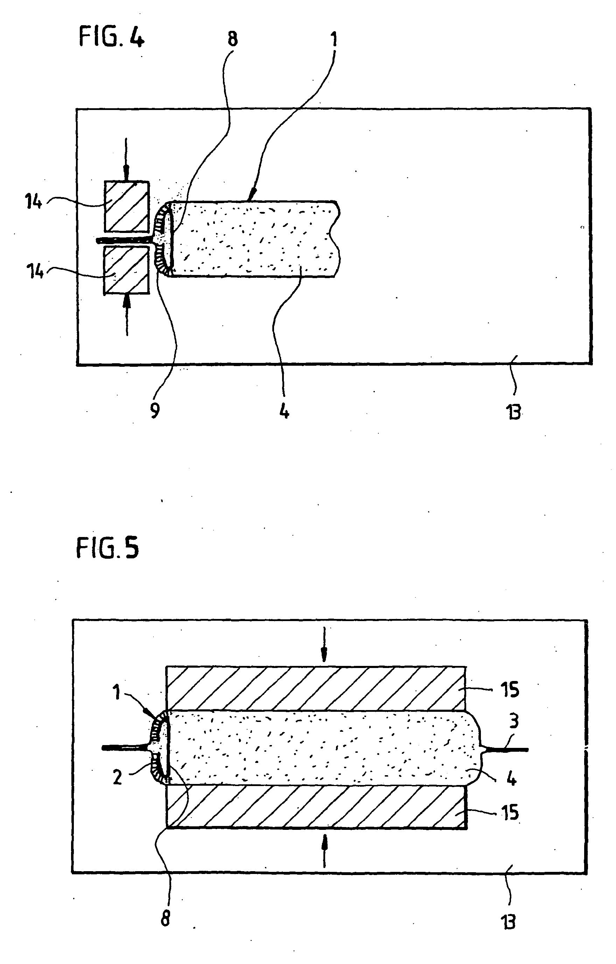

- Fig. 4: das luftdichte Verschließen des evakuierten Folienbeutels; sowie
- Fig. 5: das Pressen des evakuierten Folienbeutels in der Vakuumkammer.

In einen einseitig offenen Flachbeutel 1 der Größe 450 mm x 470 mm aus zwei deckungsgleichen Aluminiumverbundfolien 2, welche entlang mehrerer Ränder 3 miteinander verschweißt sind, wird 900 g lockeres, schüttfähiges Perlitpulver 4 mit einer Korngröße von weniger als 0,05 mm eingefüllt, d.h., eingeschüttet. Hierzu kann ein Trichter 5 od. dgl. verwendet werden.

Anschließend wird in die Öffnung 6 in dem Folienbeutel 1 ein wannenförmiges Polyestervlies mittels eines Abstandshalters 7, bspw. aus Metall, mit den Abmessungen 400 mm x 30 mm x 5 mm eingeführt. Dieser Abstandhalter 7 trägt das wannenförmige Filtermaterial 8, insbesondere ein Polyestervlies, das an den vorgesehenen Klebeflächen zur Innenseite des Folienbeutels hin mit einem Klebefilm beschichtet ist und eine relativ niedrige Siegeltemperatur um 100 °C ermöglicht. Der Abstandhalter 7 wird so weit eingeführt, bis sich seine Oberkante 10 in einem Abstand von etwa 65 mm unterhalb der oberseitigen Öffnung 6 des Folienbeutels 1 befindet. Gehalten wird der Abstandhalter 7 durch von seiner Oberseite 10 nach außen ragende Stäbe 11.

Je nach Ausführungsform wird nun von beiden Seiten mit den Backen 12 einer Handschweißzange je eine Siegelnaht parallel zur innenliegenden Stange 7 erzeugt, und zwar etwa auf Höhe der Kante des Abstandhalters 7, um das Filtermaterial 8 mit dem Folienbeutel 1 zu verschweißen. Damit wird das Polyestervlies 8 an der Stange 7 mit der Siegelschicht des Hochbarrierebeutels 1 verbunden. Eine weitere Schweißung erfolgt mit seitlichen Siegelbacken.

In diesem Zustand wird der Folienbeutel 1 in eine Vakuumkammer 13 gelegt und evakuiert.

In einem folgenden Schritt wird die Öffnung 6 des Folienbeutels 1 vollständig verschweißt, und zwar mittels in der Vakuumkammer 13 angeordneter Schweißbacken 14.

Sodann wird der evakuierte Folienbeutel 1 noch innerhalb der evakuierten Vakuumkammer 13 durch eine darin angeordnete Presse 15 in die Form einer Platte der Größe 400 mm x 400 mm x 30 mm gebracht. Solange die Vakuumkammer noch evakuiert ist, ist der Folienbeutel 1 noch leicht formbar. Evtl. kann der Formgebungsvorgang durch eine Rüttelvorrichtung unterstützt werden, bspw. indem die beiden Backen der Presse 15 auf einer Rüttelvorrichtung angeordnet sind und von dieser in Vibrationen versetzt werden.

Nach dem Belüften der Vakuumkammer 13 preßt der äußere, atmosphärische Druck das fertige, platten- oder quaderförmige Vakuumpaneel stark zusammen, wodurch das Pulver 4 in derjenigen Form gehalten wird, welche es in der Presse 15 angenommen hat. Die randseitig 3 überstehenden Schweißlaschen werden an die Stirnseiten des Paneels herangefaltet, wodurch dieses fertig ist.

Nach Abschluß des Herstellungsprozesses wird der Gasdruck in dem fertigen Paneel kontrolliert, um festzustellen, ob bei der Produktion der Vakuumdämmplatten die erforderlichen Gasdruckwerte von unter 0,1 mbar bis 0,05 mbar erreicht wurden. Diese Kontrolle muss bei jeder hergestellten Vakuumdämmplatte 15 durchgeführt werden, um die entsprechende Qualität gewährleisten zu können.

So hergestellte Vakuumdämmplatten haben bei einer Füllung aus feinem Perlitpulver 4 im evakuierten Zustand eine Wärmeleitfähigkeit zwischen 0,006 und 0,007 W/mK bei einer Dichte von etwa 200 kg/m³. Bei einem Gasdruck von 2 mbar steigt die Wärmeleitfähigkeit auf einen Wert von 0,010 W/mK an. Dies kann als der maximal zulässige Gasdruck am Ende der Nutzungsdauer angesehen werden.

Eine Adsorption von Wasserdampf, dessen Vorhandensein das Vakuum verschlechtert, erreicht man dadurch, dass man zu dem ausgeheizten Pulver 4 vor oder nach dem Verfüllen in den Beutel 1 (jedoch vor dem Einsiegeln des wannenförmigen Filtermaterials 8) Trocknungsmittel, z.B. Zeolithe oder Calciumoxid, beigibt.

Folienumhüllungen aus Aluminiumverbundfolie bedingen z.B. einen Gaseintrag von 0,6 mbar·liter/(m²·Jahr). Der Wasserdampfeintrag ist sehr gering. Bei einer 30 mm dicken Vakuumdämmung mit einer Füllung aus Feinperlit steigt der Gasdruck in diesem Fall nur um 0,02 mbar pro Jahr an. Bei einem maximalen Gasdruck von 1 mbar dauert es also etwa 50 Jahre, bis diese Grenze erreicht ist. Damit können aluminiumfolienumhüllte Vakuumdämmplatten aus Feinperlit auch Anwendungen im Baubereich finden. Allerdings muss die durch die Aluminiumfolie am Rand der Vakuumdämmplatten hervorgerufene Wärmebrücke mit in Betracht gezogen werden. Diese kann zu einem Teil dadurch vermindert werden, dass nur großformatige Vakuumdämmplatten mit einer Mindestgröße von 0,5 m² zur Anwendung kommen und zudem eine zweilagige Anordnung ausgeführt wird, bei der die zweite Lage die Fugen der ersten Lage überdeckt.

Anwendungen der Vakuumdämmplatten mit einer Füllung aus Feinperlit sind auch für die Isolierung von Gefrierschränken interessant. Hier ist im Rahmen der vakuumdichten Umhüllung eine Kombination aus einer metallbedampften Folie an derjenigen Flachseite, die dem kalten Bereich der Gefrierschrankwand zugewandt ist, und einer Aluminiumverbundfolie an der gegenüberliegenden Flachseite möglich. Aufgrund der geringeren Diffusion von Gasen und Wasserdampf durch die metallisierte Verbundfolie bei den tieferen Temperaturen von -20 bis -30 °C ist auch hier eine ausreichende Lebensdauer der Vakuumdämmung von 10 bis 20 Jahren erreichbar. Die Wärmebrücken sind aufgrund der geringen Weiterleitung durch die metallisierte Hochbarrierefolie bedeutend geringer als bei der Ausführung mit beidseitiger Aluminiumverbundfolie.

## Patentansprüche

1. Verfahren zur Herstellung eines folienumhüllten, mit einem Pulver (4) gefüllten, plattenförmigen Vakuumdämmkörpers, wobei:
a) aus einer vakuumdichten Folie (2) wird ein an wenigstens einer Seite (6) offener Beutel (1) gebildet; **gekennzeichnet durch** die folgenden Schritte:
b) im Bereich der Öffnung (6) des Folienbeutels (1) wird ein Filtermaterial (8), das luftdurchlässig, aber undurchlässig für Pulverstaub (4) ist, mit der Innenseite des Folienbeutels (1) verklebt oder verschweißt, derart, dass das Beutelinnere dort staubdicht abgeschlossen ist, jedoch noch Luft austreten kann;
c) der an einer Seite (6) offene, mit ungeformtem, losem Pulver (4) befüllte Beutel (1) wird **durch** die Öffnung (6) des befüllten Folienbeutels (1) evakuiert,
d) schließlich wird der evakuierte Folienbeutel unter Vakuum luftdicht verschlossen.

2. Verfahren nach Anspruch 1, **dadurch gekennzeichnet, dass** der Folienbeutel (1) aus Aluminiumverbundfolie (2) und/oder metallisierter Hochbarrierefolie (2) gefertigt wird.

3. Verfahren nach Anspruch 1 oder 2, **dadurch gekennzeichnet, dass** der Folienbeutel (1) auf einer Seite aus einer Aluminiumverbundfolie (2) und auf einer anderen, insbesondere gegenüberliegenden Seite aus einer aluminiumfolienfreien Hochbarrierefolie (2) gefertigt wird, die entlang ihrer Ränder (3) miteinander versiegelt werden.

4. Verfahren nach einem der Ansprüche 1 bis 3, **dadurch gekennzeichnet, dass** an der Innenseite des Folienbeutels (1) eine Metallscheibe mit Sensorvlies befestigt wird, mit deren Hilfe sich der interne Gasdruck des fertigen Vakuumdämmkörpers zerstörungsfrei feststellen läßt.

5. Verfahren nach einem der vorhergehenden Ansprüche, **dadurch gekennzeichnet, dass** das Pulver (4) pyrogene Kieselsäure und/oder Fällungskieselsäure in einem Anteil von bis zu 100 % enthält.

6. Verfahren nach einem der vorhergehenden Ansprüche, **dadurch gekennzeichnet, dass** das Pulver (4) Perlitpulver in einem Anteil von bis zu 100 % enthält, insbesondere Perlitpulver mit einer Korngröße kleiner als 0,1 mm.

7. Verfahren nach Anspruch 5 in Verbindung mit Anspruch 6, **gekennzeichnet durch** einen Anteil des Perlitpulvers von bis zu 90 %, dem pyrogene Kieselsäure und/oder Fällungskieselsäure in einem Anteil von 10 - 20 % beigemischt ist.

8. Verfahren nach einem der vorhergehenden Ansprüche, **dadurch gekennzeichnet, dass** das Pulver (4) einen Anteil eines Trocknungsmittels enthält, z.B. Zeolith oder Calciumoxid.

9. Verfahren nach einem der vorhergehenden Ansprüche, **dadurch gekennzeichnet, dass** das Pulver (4) einen Anteil eines Gettermaterials enthält.

10. Verfahren nach einem der vorhergehenden Ansprüche, **dadurch gekennzeichnet, dass** sich der Folienbeutel (1) beim Einfüllen des Pulvers (4) um ein Mehrfaches der späteren Dicke des Vakuumdämmkörpers ausbeult.

11. Verfahren nach einem der vorhergehenden Ansprüche, **dadurch gekennzeichnet, dass** als Filtermaterial (8) ein flächenhafter, im wesentlichen zweidimensionaler Körper oder ein voluminöser, dreidimensionaler Körper verwendet wird.

12. Verfahren nach einem der vorhergehenden Ansprüche, **dadurch gekennzeichnet, dass** als Filtermaterial (8) ein Vlies aus einem organischen oder anorganischen Material, insbesondere ein Polyestervlies, verwendet wird.

13. Verfahren nach einem der vorhergehenden Ansprüche, **dadurch gekennzeichnet, dass** das flächenhafte Filtermaterial (8) aus einem Streifen gefaltet wird, wobei die Länge des Streifens etwa der Breite des Folienbeutels (1) entspricht.

14. Verfahren nach einem der vorhergehenden Ansprüche zur Herstellung einer Vakuumdämmplatte, **dadurch gekennzeichnet, dass** das flächenhafte Filtermaterial (8) etwa wannen- oder quaderförmig mit einer offenen Seitenfläche vorgeformt wird, wobei die Länge des Quaders/der Wanne (etwa) der Breite des Vakuumdämmkörpers entspricht, während die Breite des Quaders (etwa) der Dicke der Vakuumdämmkörpers entspricht.

15. Verfahren nach Anspruch 14, **dadurch gekennzeichnet, dass** die Höhe des flächenhaften, wannenförmigen Filtermaterials (8) lotrecht zu dessen offener Seite etwa 0,3 bis 3 mal so groß ist wie die Breite des Quaders/der Wanne, vorzugsweise 0,5 bis 1,5 mal so groß.

16. Verfahren nach einem der Ansprüche 14 oder 15, **dadurch gekennzeichnet, dass** das flächige, wannen- oder quaderförmig vorgeformte Filtermaterial (8) derart in die Öffnung (6) des befüllten Folienbeutels (1) eingelegt wird, dass die Öffnung des Quaders/der Wanne nach außen zur Öffnung (6) des Folienbeutels (1) hin zeigt.

17. Verfahren nach einem der vorhergehenden Ansprüche, **dadurch gekennzeichnet, dass** das flächige, vorzugsweise wannen- oder quaderförmig vorgeformte Filtermaterial (8) in einem Abstand von der Öffnungskante (6) des befüllten Folienbeutels (1) eingelegt wird, vorzugsweise in einem Abstand von mindestens 2 cm zu dieser Öffnungskante (6), so dass noch ein Verschließen und Versiegeln der Beutelöffnung möglich ist.

18. Verfahren nach einem der vorhergehenden Ansprüche, **dadurch gekennzeichnet, dass** das Filtermaterial (8) um einen Abstandshalter (7) gelegt wird, dessen Dimensionen der Breite und der Dicke des fertigen Vakuumpaneels entsprechen, und zusammen mit dem Abstandshalter (7) in die Öffnung (6) des Folienbeutels (1) eingebracht wird.

19. Verfahren nach Anspruch 18, **dadurch gekennzeichnet, dass** ein stangenförmiger Abstandshalter (7), vorzugsweise aus Metall, verwendet wird, der vor dem Einbringen in die Vakuumkammer (13) wieder entfernt wird.

20. Verfahren nach Anspruch 18, **dadurch gekennzeichnet, dass** ein Abstandhalter (7) verwendet wird, der aus einem offenporigen Dämmmaterial besteht mit einer Druckbelastbarkeit von mindestens 20 kPa bei 10 % Stauchung.

21. Verfahren nach Anspruch 20, **dadurch gekennzeichnet, dass** ein Abstandshalter (7) verwendet wird, der aus gepresstem Kieselsäurepulver oder aus einem offenporigen Schaum besteht und in dem Vakuumpaneel verbleibt.

22. Verfahren nach einem der Ansprüche 20 oder 21, **dadurch gekennzeichnet, dass** ein Abstandhalter (7) verwendet wird, der mit Löchern in einer Richtung lotrecht zu dem Querschnitt der Beutelöffnung (6) versehen ist, vorzugsweise mit einem Durchmesser zwischen 1 mm und 5 mm.

23. Verfahren nach einem der Ansprüche 18 bis 22, **dadurch gekennzeichnet, dass** das Filtermaterial (8) mit dem Abstandshalter (7) als Widerlager von außen mit einem Siegelwerkzeug (12) mit der Siegelfläche an der Innenseite des Folienbeutels (1) verbunden wird.

24. Verfahren nach einem der vorhergehenden Ansprüche, **dadurch gekennzeichnet, dass** das innenliegende Filtermaterial (8) mittels einer Siegelvorrichtung (12) mit der innenliegenden Siegelschicht der Hochbarrierefolie (2) verbunden wird, vorzugsweise auf einer Breite zwischen 2 mm und 15 mm, insbesondere zwischen 5 mm und 10 mm.

25. Verfahren nach einem der vorhergehenden Ansprüche, **dadurch gekennzeichnet, dass** das Filtermaterial (8), insbesondere ein Polyestervlies, mittels eines flächigen Klebematerials (9), insbesondere einem Polyolefinklebevlies, unter Temperatureinwirkung mit der innenliegenden Siegelschicht des Folienbeutels (1) verbunden wird.

26. Verfahren nach einem der vorhergehenden Ansprüche, **dadurch gekennzeichnet, dass** das Filtermaterial (8), insbesondere der gefaltete Streifen, auf zwei oder mehr Seiten mit der Siegelschicht des Folienbeutels (1) versiegelt wird, wobei die Siegelnaht (-nähte) an der offenen Seite des gefalteten Streifens verläuft (verlaufen).

27. Verfahren nach Anspruch 26, **dadurch gekennzeichnet, dass** ein oder mehrere, nicht mit dem Folienstreifen (8) versiegelte Flächenbereiche des Folienbeutels (1) mit einer Klammer so zusammengedrückt werden, dass kein Pulver (4) entweichen kann.

28. Verfahren nach Anspruch 27, **dadurch gekennzeichnet, dass** nach dem Evakuieren und Versiegeln des Folienbeutels (1) in der Vakuumkammer (13) die Klammern entfernt werden.

29. Verfahren nach einem der vorhergehenden Ansprüche, **dadurch gekennzeichnet, dass** das eingeklebte oder eingeschweißte Filterteil (8) mit dem Folienbeutel (1) ein quaderförmiges Innenvolumen bildet, in dem sich das Pulver (4) verteilen kann.

30. Verfahren nach einem der vorhergehenden Ansprüche, **dadurch gekennzeichnet, dass** das Pulver (4) nach dem pulverdichten Einkleben des Filtermaterials (8) durch Rütteln und Pressen in die gewünschte Form gebracht wird.

31. Verfahren nach einem der vorhergehenden Ansprüche, **dadurch gekennzeichnet, dass** der evakuierte und versiegelte Folienbeutel (1) in der Vakuumkammer (13) durch Pressen und Rütteln in die gewünschte Form gebracht wird.

32. Verfahren nach einem der vorhergehenden Ansprüche, **dadurch gekennzeichnet, dass** das Pulver (4) nach dem pulverdichten Einkleben des Filtermaterials (8) und/oder bei/nach dem Evakuieren und/oder Versiegeln des Folienbeutels (1) durch Rütteln und Pressen in eine platten- und/oder quaderförmige Form gebracht wird.

33. Verfahren nach einem der vorhergehenden Ansprüche, **dadurch gekennzeichnet, dass** das (evakuierte) Pulver (4) im Folienbeutel (1) auf eine Dichte von 120 bis 250 kg/m³, vorzugsweise 180 bis 220 kg/m³ komprimiert wird.

34. Verfahren nach einem der vorhergehenden Ansprüche, **dadurch gekennzeichnet, dass** dem mit Pulver (4) gefüllten Folienbeutel (1) während des Pressens auf der Oberfläche Strukturen eingeprägt werden.

35. Folienumhüllter, mit einem pulver (4) gefüllter, plattenförmiger, evakuierter Vakuumdämmkörper, wobei die Umhüllung aus einem Beutel (1) aus einer vakuumdichten Folie (2) hergestellt ist, **dadurch gekennzeichnet, dass** in der Nähe einer oder mehrerer, versiegelter Evakuierungsöffnung(en) des Beutels (1) mit dessen Innenseite ein Filtermaterial (8) verklebt oder verschweißt ist, das zusammen mit dem Folienbeutel (1) ein Innenvolumen zur Aufnahme des Pulvers (4) bildet.

36. Vakuumdämmkörper nach Anspruch 35, **dadurch gekennzeichnet, dass** das Filtermaterial (8) die Gestalt eines Streifens oder einer Wanne hat, deren Länge etwa der Breite des Vakuumdämmkörpers entspricht.

37. Vakuumdämmkörper nach Anspruch 35 oder 36, **dadurch gekennzeichnet, dass** das innenliegende Filtermaterial (8) mit der Innenseite des Folienbeutels (1) verklebt oder verschweißt ist.

## Claims

1. Method for the production of a panel-shaped vacuum insulation element, which is wrapped in a film and filled with a powder (4), whereby:
a) from a vacuum-tight film (2), there is made a bag (1), which is open at least on one side (6);
comprising the following steps:
b) in the area of the opening (6) of the film bag (1), a filter material (8), which is air-permeable but impermeable to powder dust (4), is adhered or fused to the internal face of the film bag (1) such that there the bag's interior is sealed off in a dust-tight manner but that air can still exit;
c) the bag (1), which is open on one side (6) and filled with a loose powder (4), is evacuated through the opening (6) of the filled film bag (1);
d) finally, the evacuated film bag is sealed in an airtight manner under a vacuum.

2. Method according to claim 1, **characterized in that** the film bag (1) is made from aluminum composite film (2) and/or metalized high-barrier film (2).

3. Method according to claim 1 or 2, **characterized in that** the film bag (1) is made on one side from an aluminum composite film (2) and on another, in particular opposite side, of a high-barrier film free of aluminum film (2), which are sealed with one another along their edges (3).

4. Method according to one of claims 1 to 3, **characterized in that** on the internal face of the film bag (1) a metal disk with sensor fabric is affixed, which is used to non-destructively detect the internal gas pressure of the finished vacuum insulation element.

5. Method according to one of the preceding claims, **characterized in that** the powder (4) contains pyrogenic silica and/or precipitated silica in a proportion of up to 100 %.

6. Method according to one of the preceding claims, **characterized in that** the powder (4) contains perlite powder in a proportion of up to 100 %, particularly perlite powder with a grain size smaller than 0.1 mm.

7. Method according to claim 5 in conjunction with claim 6, **characterized by** a proportion of the perlite powder of up to 90 %, into which the pyrogenic and/or precipitated silica is mixed in a proportion of 10 - 20 %.

8. Method according to one of the preceding claims, **characterized in that** the powder (4) contains a proportion of a drying agent, e.g., zeolite or calcium oxide.

9. Method according to one of the preceding claims, **characterized in that** the powder (4) contains a proportion of a getter material.

10. Method according to one of the preceding claims, **characterized in that** the film bag (1) bulges out by a multiple of the later thickness of the vacuum insulation element while the powder (4) is filled.

11. Method according to one of the preceding claims, **characterized in that** a flat, essentially two-dimensional element or a voluminous, three-dimensional solid is used as the filter material (8).

12. Method according to one of the preceding claims, **characterized in that** a fleece of an organic or inorganic material, particularly a polyester fleece, is used as the filter material (8).

13. Method according to one of the preceding claims, **characterized in that** the flat filter material (8) is folded from a strip, the length of the strip corresponding approximately to the width of the film bag (1).

14. Method according to one of the preceding claims for the production of a vacuum insulation panel, **characterized in that** the flat filter material (8) is preformed in an approximately tub-like or cuboid shape with one open side face, the length of the cuboid or trough (approximately) corresponding to the width of the vacuum insulation element and the width of the cuboid (approximately) corresponding to the thickness of the vacuum insulation element.

15. Method according to claim 14, **characterized in that** the height of the flat, tub-shaped filter material (8) perpendicular to its open side is about 0.3 to 3 times as great as the width of the cuboid/trough, preferably 0.5 to 1.5 times as great.

16. Method according to one of claims 14 or 15, **characterized in that** the flat, tub- or cuboid-shaped preformed filter material (8) is inserted in the opening (6) of the filled film bag (1) in such a manner that the opening of the cuboid/tub points outward towards the opening (6) of the film bag (1).

17. Method according to one of the preceding claims, **characterized in that** the flat, preferably tub- or cuboid-shaped preformed filter material (8) is inserted at a distance from the opening edge (6) of the filled film bag (1), preferably at a distance of at least 2 cm from this opening edge (6), in such a manner that closing and sealing the bag opening is still possible.

18. Method according to one of the preceding claims, **characterized in that** the filter material (8) is placed around a spacer (7) whose dimensions correspond to the width and thickness of the finished vacuum panel and is introduced into the opening (6) of the film bag (1) together with the spacer (7).

19. Method according to claim 18, **characterized in that** a bar-shaped spacer (7), preferably of metal, is used, which is removed again before placement in the vacuum chamber (13).

20. Method according to claim 18, **characterized in that** a spacer (7) is used, which is made from an open-pored insulation material with a pressure load capacity of at least 20 kPa at 10 % compression.

21. Method according to claim 20, **characterized in that** a spacer (7) is used, which consists of a compressed silica powder or an open-pored foam and remains in the vacuum panel.

22. Method according to one of claims 20 or 21, **characterized in that** a spacer (7) is used, which is provided with holes in a direction perpendicular to the cross section of the bag opening (6), preferably with a diameter between 1 mm and 5 mm.

23. Method according to one claims 18 to 22, **characterized in that** the filter material (8) with the spacer (7) are joined as an abutment from the outside with a sealing tool (12) with the sealing surface on the internal face of the film bag (1).

24. Method according to one of the preceding claims, **characterized in that** the interior filter material (8) is joined using a sealing device (12) with the interior sealing layer of the high-barrier film (2), preferably at a width between 2 mm and 15 mm, particularly between 5 mm and 10 mm.

25. Method according to one of the preceding claims, **characterized in that** the filter material (8), in particular a polyester fleece, is joined by means of a flat adhesive material (9), in particular a polyolefin adhesive fleece, under the influence of temperature, with the interior sealing layer of the film bag (1).

26. Method according to one of the preceding claims, **characterized in that** the filter material (8), in particular the folded strip, is sealed on two or more sides to the sealing layer of the film bag (1), the sealing seam(s) running along the open side of the folded strip.

27. Method according to claim 26, **characterized in that** one or more surface areas of the film bag (1), not sealed to the film strips (8), are compressed together with a clamp such that no powder (4) can escape.

28. Method according to claim 27, **characterized in that** the clamps are removed after the film bag (1) is evacuated and sealed in the vacuum chamber (13).

29. Method according one of the preceding claims, **characterized in that** the bonded or welded filter portion (8) forms a cuboid-shaped interior volume with the film bag (1) in which the powder (4) can distribute itself.

30. Method according to one of the preceding claims, **characterized in that** the powder (4) is brought into the desired shape by vibration and compression after the powder-density bonding of the filter material (8).

31. Method according to one of the preceding claims, **characterized in that** the evacuated and sealed film bag (1) is brought into the desired shape by vibration and compression in the vacuum chamber (13).

32. Method according to one of the preceding claims, **characterized in that** the powder (4) is brought into a panel or cuboid shape by vibration and compression after the powder-density bonding of the filter material (8) and/or during/after the evacuation and/or sealing of the film bag (1).

33. Method according to one of the preceding claims, **characterized in that** the (evacuated) powder (4) in the film bag (1) is compressed to a density of 120 to 250 kg/m³, preferably 180 to 220 kg/m³.

34. Method according to one of the preceding claims, **characterized in that** structures are embossed on the surface of the film bag (1) filled with powder (4) during the pressing.

35. Panel-shaped, evacuated vacuum insulation element, which is wrapped in a film and filled with a powder (4), whereby the wrapping is made from a bag (1) of a vacuum tight film (2), **characterized in that** near one or more sealed evacuation opening(s) of the bag (1), a filter material (1) is adhered or fused to its inner side, which, together with the film bag (1), forms an internal volume for receiving the powder (4).

36. Vacuum insulation element according to claim 35, **characterized in that** the filter material (8) has the shape of a strip or a tub, whose length corresponds approximately to the width of the vacuum insulation element.

37. Vacuum insulation element according to claim 35 or 36, **characterized in that** the filter material (8) is adhered or fused to the inner side of the film bag (1).

## Revendications

1. Procédé pour la fabrication d'un élément isolant sous vide, de forme plate, rempli de poudre (4), enrobé d'un film selon lequel
a) une poche ouverte (1) sur au moins un côté (6) est réalisée à partir d'un film (2) étanche au vide, **caractérisée par** les étapes suivantes :
b) dans la zone de l'ouverture (6) de la poche en film (1), un matériau filtrant (8) qui est perméable à l'air, mais imperméable aux poussières pulvérulentes, est collé ou soudé à la face intérieure de la poche en film, (1) de façon telle que l'intérieur de la poche y est fermé de manière étanche aux poussières, permettant toutefois de laisser sortir l'air ;
c) la poche (1) remplie de poudre en vrac, non moulée (4), ouverte sur un côté (6) est mise au vide par l'ouverture (6) de la poche en film (1) remplie,
d) finalement, la poche en film évacuée est fermée hermétiquement sous vide.

2. Procédé selon la revendication 1, **caractérisé en ce que** la poche en film (1) est constituée d'un film composite d'aluminium (2) et/ou d'un film haute barrière métallisé (2).

3. Procédé selon la revendication 1 ou 2, **caractérisé en ce que** la poche en film (1) est réalisée sur un côté à partir d'un film composite d'aluminium (2) et sur un autre côté, en particulier sur un côté opposé, à partir d'un film haute barrière (2) sans feuille d'aluminium qui sont scellés entre eux sur la longueur de leurs bords (3).

4. Procédé selon l'une des revendications 1 à 3, **caractérisé en ce qu'**à l'intérieur de la poche en film (1) est fixée une rondelle métallique avec un non-tissé capteur servant à détecter de manière non destructive la pression de gaz interne de l'élément isolant sous vide fini.

5. Procédé selon l'une des revendications précédentes, **caractérisé en ce que** la poudre (4) contient une proportion maximale d'acide silicique pyrogène et/ou d'acide silicique par précipitation de 100 %.

6. Procédé selon l'une des revendications précédentes, **caractérisé en ce que** la poudre (4) contient une proportion maximale de poudre de perlite de 100 %, en particulier une poudre de perlite d'une grosseur de grain inférieure à 0,1 mm.

7. Procédé selon la revendication 5 en association avec la revendication 6, **caractérisé en ce qu'**une proportion de poudre de perlite de maximum 90 % est mélangée à une proportion d'acide silicique pyrogène et/ou d'acide silicique par précipitation de 10 à 20 %.

8. Procédé selon l'une des revendications précédentes, **caractérisé en ce que** la poudre (4) contient une proportion d'un agent de dessiccation, par ex. de zéolithe ou d'oxyde de calcium.

9. Procédé selon l'une des revendications précédentes, **caractérisé en ce que** la poudre (4) contient une proportion d'un matériau getter.

10. Procédé selon l'une des revendications précédentes, **caractérisé en ce que** la poche en film (1) en remplissant la poudre (4) se bombe d'un multiple de l'épaisseur ultérieure de l'élément isolant sous vide.

11. Procédé selon l'une des revendications précédentes, **caractérisé en ce qu'**un élément à deux surfaces, essentiellement bidimensionnel ou un élément volumineux tridimensionnel est utilisé comme matériau filtrant (8).

12. Procédé selon l'une des revendications précédentes, **caractérisé en ce qu'**un non-tissé en matière organique ou inorganique, en particulier un non-tissé en polyester, est utilisé comme matériau filtrant (8).

13. Procédé selon l'une des revendications précédentes, **caractérisé en ce que** le matériau filtrant (8) à deux surfaces est plié en une bande ; la longueur de la bande correspondant approximativement à la largeur de la poche en film (1).

14. Procédé selon l'une des revendications précédentes pour la réalisation d'un panneau isolant sous vide, **caractérisé en ce que** le matériau filtrant (8) à deux surfaces est préformé approximativement en forme de cuve ou de parallélépipède avec une surface latérale ouverte ; la longueur du parallélépipède/de la cuve correspondant (approximativement) à la largeur de l'élément isolant sous vide, tandis que la largeur du parallélépipède correspond (approximativement) à l'épaisseur de l'élément isolant sous vide.

15. Procédé selon la revendication 14, **caractérisé en ce que** la hauteur du matériau filtrant (8) à deux surfaces, en forme de cuve, perpendiculairement à son côté ouvert, est approximativement 0,3 à 3 fois égale à la largeur du parallélépipède/de la cuve, de préférence de 0,5 à 1,5 fois égale.

16. Procédé selon l'une des revendications 14 ou 15, **caractérisé en ce que** le matériau filtrant (8) préformé plan, en forme de cuve ou de parallélépipède, est inséré de façon telle dans l'ouverture (6) de la poche en film (1) remplie que l'ouverture du parallélépipède/de la cuve est tournée vers l'extérieur de l'ouverture (6) de la poche en film (1).

17. Procédé selon l'une des revendications précédentes, **caractérisé en ce que** le matériau filtrant (8) préformé plan, de préférence en forme de cuve ou de parallélépipède, est inséré à un intervalle du bord de l'ouverture (6) de la poche en film (1) remplie, de préférence à un intervalle d'au minimum 2 cm par rapport à ce bord d'ouverture (6) de façon à permettre une fermeture et un scellement de l'ouverture de la poche.

18. Procédé selon l'une des revendications précédentes, **caractérisé en ce que** le matériau filtrant (8) est placé autour d'un écarteur (7) dont les dimensions correspondent à la largeur et à l'épaisseur du panneau sous vide fini puis introduit avec l'écarteur (7) dans l'ouverture (6) de la poche en film (1).

19. Procédé selon la revendication 18, **caractérisé en ce qu'**un écarteur (7) en forme de barre, de préférence en métal, est utilisé, lequel est de nouveau retiré avant la mise en place dans la chambre à vide (13).

20. Procédé selon la revendication 18, **caractérisé en ce qu'**un écarteur (7) est utilisé, lequel se compose d'un matériau isolant à pores ouverts d'une charge de pression d'au minimum 20 kPa à 10 % d'écrasement.

21. Procédé selon la revendication 20, **caractérisé en ce qu'**un écarteur (7) est utilisé, lequel se compose de poudre d'acide silicique pressée ou d'une mousse à pores ouverts et qui reste dans le panneau sous vide.

22. Procédé selon l'une des revendications 20 ou 21, **caractérisé en ce qu'**un écarteur (7) est utilisé, lequel comporte des orifices dans un sens perpendiculaire à la section de l'ouverture de la poche (6), de préférence d'un diamètre compris entre 1 mm et 5 mm.

23. Procédé selon l'une des revendications 18 à 22, **caractérisé en ce que** le matériau filtrant (8) avec l'écarteur (7) comme butée est relié de l'extérieur avec un outil de scellement (12) à la surface de scellement sur la face intérieure de la poche en film (1).

24. Procédé selon l'une des revendications précédentes, **caractérisé en ce que** le matériau filtrant (8) intérieur est relié au moyen d'un dispositif de scellement (12) à la couche de scellement intérieure du film haute barrière (2), de préférence sur une largeur comprise entre 2 et 15 mm, en particulier entre 5 et 10 mm.

25. Procédé selon l'une des revendications précédentes, **caractérisé en ce que** le matériau filtrant (8), en particulier un non-tissé en polyester, est relié au moyen d'un matériau adhésif en nappe (9), en particulier un non-tissé adhésif à base de polyoléfines, à la couche de scellement intérieure de la poche en film (1) sous action de la température.

26. Procédé selon l'une des revendications précédentes, **caractérisé en ce que** le matériau filtrant (8), en particulier la bande pliée, est scellé sur deux ou plusieurs côtés à la couche de scellement de la poche en film (1) ; la/les soudure(s) de scellement étant sur le côté ouvert de la bande pliée.

27. Procédé selon la revendication 26, **caractérisé en ce qu'**une ou plusieurs zones superficielles non scellées à la bande de film (8) de la poche en film (1) sont écrasées avec une bride de façon que de la poudre (4) ne puisse s'échapper.

28. Procédé selon la revendication 27, **caractérisé en ce que** les brides sont retirées après évacuation et scellement de la poche en film (1) dans la chambre à vide (13).

29. Procédé selon l'une des revendications précédentes, **caractérisé en ce que** l'élément filtrant (8) collé ou scellé à la poche en film (1) constitue un volume intérieur parallélépipédique dans lequel la poudre (4) peut se répartir.

30. Procédé selon l'une des revendications précédentes, **caractérisé en ce que** la poudre (4) après collage étanche à la poudre du matériau filtrant (8) est mise à la forme souhaitée par vibration et compression.

31. Procédé selon l'une des revendications précédentes, **caractérisé en ce que** la poche en film (1) évacuée et scellée est mise à la forme souhaitée dans la chambre à vide (13) par compression et vibration.

32. Procédé selon l'une des revendications précédentes, **caractérisé en ce que** la poudre (4) après collage étanche à la poudre du matériau filtrant (8) et/ou à/après l'évacuation et/ou le scellement de la poche en film (1) est mise en forme de plaque et/ou de parallélépipède par vibration et compression.

33. Procédé selon l'une des revendications précédentes, **caractérisé en ce que** la poudre (4) (évacuée) dans la poche en film (1) est compressée à une densité de 120 à 250 kg/m³, de préférence comprise entre 180 et 220 kg/m³.

34. Procédé selon l'une des revendications précédentes, **caractérisé en ce que** des structures sont gaufrées sur la surface de la poche en film (1) remplie de poudre (4) durant la compression.

35. Élément isolant sous vide évacué, de forme plate, rempli de poudre (4), enrobé d'un film, où l'enveloppe est réalisée à partir d'une poche (1) en un film étanche au vide (2), **caractérisé en ce qu'**à proximité d'une ou de plusieurs ouvertures d'évacuation scellées de la poche (1) un matériau filtrant (8) est collé ou soudé à sa face intérieure, lequel constitue avec la poche en film (1) un volume intérieur destiné à recevoir la poudre (4).

36. Élément isolant sous vide selon la revendication 35, **caractérisé en ce que** le matériau filtrant (8) a la forme d'une bande ou d'une cuve dont la longueur correspond approximativement à la largeur de l'élément isolant sous vide.

37. Élément isolant sous vide selon la revendication 35 ou 36, **caractérisé en ce que** le matériau filtrant (8) intérieur est collé ou soudé à la face intérieure de la poche en film (1).
